(19) Europäisches Patentamt
European Patent Office
Office européen des brevets

(11) **EP 2 706 717 A1**

(12) **EUROPEAN PATENT APPLICATION**

(43) Date of publication:
**12.03.2014 Bulletin 2014/11**

(51) Int Cl.:
***H04L 29/06*** *(2006.01)*      ***H04L 12/22*** *(2006.01)*

(21) Application number: **12306093.1**

(22) Date of filing: **11.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Onno, Stephane**
**35576 Cesson-Sévigné (FR)**

• **Heen, Olivier**
**35576 Cesson-Sévigné (FR)**
• **Neumann, Christoph**
**35576 Cesson-Sévigné (FR)**

(74) Representative: **Huchet, Anne**
**Technicolor**
**1-5 rue Jeanne d'Arc**
**92130 Issy-les-Moulineaux (FR)**

(54) **Method and devices for registering a client to a server**

(57)     The invention relates to a method for registering a client to a server connected through a network, the client being assigned with a determined network address. The method comprises a step of sending by the client to the server, a request comprising a first network address among a sequence of at least one network address; a step of denying by the server the request comprising the first network address among the sequence of at least one network address; a step of sending by the client to the server, a request comprising a second network address; a step of granting by the server the request comprising the second network address when the verification of the sequence of at least one address for which request was denied succeed; and wherein the first network address among said sequence of at least one network address is derived from a first function using a shared secret between the client and the server and said determined network address of the client.

The invention further relates to a client device and a service implementing the registration method.

100

Figure 1

EP 2 706 717 A1

**Description**

TECHNICAL FIELD

The present invention relates generally to the field of secure registration of networked devices. More precisely, the invention relates to a method and device for registering a client to a server implementing a network address access control.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The protection of information and secrets over a network requires the use of secure methods to add new devices to the network. Known secure methods implement network address access control policy and raises the issue of registration of new devices. A new device is identified by a new network address. It is possible to breach network security and gain access to network information and secrets through interfering with the registration process of devices with the network. A known method for preventing security threats is the deny by default policy wherein everything not explicitly permitted, is forbidden. Such deny by default policy is used for controlling access using device network address to the secure network, any communication from an unknown network address is ignored. Thus given a service or private network that implements deny by default access control policy based on network addresses, a new device cannot directly connect and send registration credentials to such service or private network. Besides, according to such methods, any payload received from an unknown network address is ignored.

Such a system requires registering the new device's network address and granting access before the device can connect for the first time. There are several known methods to register the network address of the new device accordingly. A first solution is the manual registration. The user of the device retrieves the network address from his device and sends the network address to the administrator of the service who registers this address. A second solution is the usage of a dedicated service such as a Web service. The dedicated service is provided for the sole purpose of registration. Though the dedicated service, the user is given credential to connect the service for providing securely his network address.

There are drawbacks to the registration processes as mentioned above. The manual process is painful and requires a minimum knowledge of networking. If the network address is quite long (e.g. IPV6 address), there is a high risk of error when copying the address. While a dedicated service opens a service to the Internet for the sole purpose of registration. Enabling a new internet service augments the attack surface and must be avoided if possible.

The technical problem to solve is to provide an automated solution for registering a new address, without opening/implementing a dedicated registration service, nor interpreting the payload of registration messages.

The present invention provides such a solution.

SUMMARY OF INVENTION

In a first aspect, the invention is directed to a method for registering a client to a server connected through a network, the client being assigned with a determined network address. The method comprises a step of sending by the client to the server, a request comprising a first network address among a sequence of at least one network address; a step of denying by the server the request comprising the first network address among the sequence of at least one network address; followed by a step of sending by the client to the server, a request comprising a second network address; and a step of granting by the server the request comprising the second network address when the verification of the sequence of at least one address for which request was denied succeed. The method being remarkable in that the first network address among the sequence of at least one network address is derived from a first function using a shared secret between the client and the server and the determined network address of the client. Thus the server is adapted to perform the verification that the successive network addresses used in the sequence are derived from the first function using the shared secret.

According to an advantageous characteristic, the first and second step are iteratively repeated for each successive network address among the sequence of at least one network address and thus a successive network address among the sequence of at least one address is derived from the first function using the shared secret and a previous network address among the sequence of at least one network address.

In a first variant, the second network address, that is last address send by the client which is also the connection address, is derived from a second function using the determined network address of the client. In a second variant, the second address is derived from a second function using an address among the sequence of at least one network address. In third variant, the second address is derived from a second function using a last address from the sequence of at least one network address. Indeed any address known from the client and the server is adapted to be a base address for the connection.

According to particular characteristics, the second function is the equal function, a hash function.

According to another particular characteristic, the first function is a one way function such as hash function. In a variant, the first function a reversible encryption function. This variant advantageously allows the server to retrieve the determined network address of the client and to compute a connection address using a second hash function.

In a first preferred embodiment, a request comprising a second network address is encrypted or protected thus advantageously protecting the second network address from eavesdropping. In a second embodiment, a request comprising a first network address or an address from the sequence is further encrypted or protected, thus further protecting the addresses of the sequence network address from eavesdropping.

In a second embodiment, once a network address of a client has already been granted access to the server, the method is iterated starting from the previous connection address. In other words, the method comprises the step a) to d) repeated for registering a third network address wherein the first network address among the sequence of at least one network address is derived from a shared secret between the client and the server and from the second network address of the client previously granted by the server. Advantageously, once the third address is granted the right to access the server, the previous address connection is denied access to the server.

In a third embodiment, the server is applying deny by default registering of network address.

In a second aspect, the invention is directed to a server device for registering a client device in a network according to the previously described method. The server device comprises means for receiving from the client device a request comprising a network address; means for storing each of the network address from each of the received request as a sequence of at least one network address; means for storing a secret shared between the client device and the server device; means for verifying that a successive network address among the sequence of at least one network address is derived from a first function using the shared secret and a previous network address among the sequence of at least one network address; means for sending a response granting registration for a network address from the last received request from the client when the verification of the sequence of at least one address succeed.

In a second aspect, the invention is directed to a client device for requesting registration in a network which access is controlled by a server device according to the previously described method. The client device comprises means for storing a determined network address wherein the determined network address is a first network address among a sequence of at least one address; means for storing a secret shared between the client device and the server device; means for iteratively computing a successive network address among the sequence of at least one network address wherein a successive network address among the sequence of at least one network address is derived from a first function using the shared secret and a previous network address among the sequence of at least one network address; means for sending to the server device a request comprising a network address wherein the network address belongs to the sequence of at least one network address followed by a second network address; means for receiving from the server device a response granting registration for a network address from second network address.

Any characteristic or embodiment described for the registering method is compatible with the network device intended to be registered by the disclosed method.

<u>BRIEF DESCRIPTION OF DRAWINGS</u>

Preferred features of the present invention will now be described, by way of non-limiting example, with reference to the accompanying drawings, in which:

**Figure 1** illustrates an exemplary network in which the present invention may be used;
**Figure 2** illustrates an exemplary server device according to a preferred embodiment of the present invention;
**Figure 3** illustrates an exemplary client device according to a preferred embodiment of the present invention;
**Figure 4** illustrates the steps of the registering method in the client device according to the first embodiment of the present invention; and
**Figure 5** illustrates the steps of the registering method according to a preferred embodiment of the present invention.

<u>DESCRIPTION OF EMBODIMENTS</u>

In the following description, a client/server model is disclosed wherein the access control policy is enforced by the server. The access control policy relies on a deny by default policy for instance implemented through an Access Control List (known as ACL) or by a whitelist managed by the server. Any known solution for implementing such policy is adapted to the invention. The term "server" or "host" refers to the same subject-matter. The term is "client" or "device" refers to the same subject-matter.

The description will be focused on MAC address wherein a numerical label is assigned to each device participating in a computer network that uses the MAC Protocol for communication. An MAC address serves host or network interface identification. However the invention is compatible with any addressing solution such as IPv4 or IPv6 addressing, or addressing solutions for instance used in mobile communication.

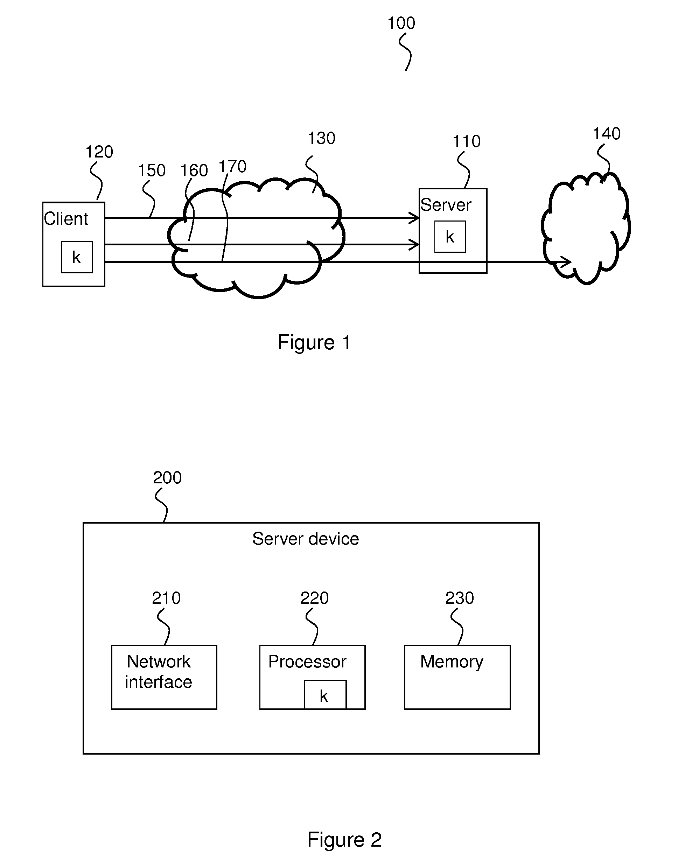

**Figure 1** illustrates an exemplary network 100 in which the present invention may be used. The network 100 comprises a server device 110 and at least a client device 120. The client 120 and the server 110 are adapted to communicate through an open network 130 such as Internet. The server 110 and the client 120 are assigned an MAC address that identifies the device for network communication. In a preferred embodiment, the network address of the client uses a plurality of network addresses for communicating through the network. In a variant, the client is assigned addresses changing along the time. In another variant, the client is assigned several network addresses at the same time. The server 110 protects the access to a private network 140. The private network 140 comprises for instance devices such as a computer or HDD storing secure data. The server 110, for example, provides Internet access to devices comprised in the private network 140. The server 110 applies a deny by default policy to a new device 110 trying to access the private network 140. However, in a variant, the private network do not exist and the server manages access to its own data.

A salient inventive idea of the present invention is to have the server 110 authenticating a new client 120 by verifying of a sequence of addresses used by the new client in registration requests 150, 160, 170 wherein the last address in the sequence 170 is the granted address. To that end, the client 120 and the server 110 share a secret k, also called a ticket, so that the sequence of addresses used in the requests sent by the client is verifiable by the server. In a first phase, a client 120 proves the possession of the secret/ticket k by changing its network address according to a sequence derived from the secret k and from the preceding address in the sequence and by trying to connect the server 110 with the sequence addresses. In other words, the secret is used by the client to compute the successive addresses used in the access requests to the server. The secret is further used by the server to verify the successive addresses in the requests sent by the client. The client, for instance, sends a first request 150 and a second request 160 respectively using a first and a second MAC address. Each request 150, 160 are denied by the server but the server verifies that the addresses are derived from the shared secret k. The sequence is limited, in a variant the sequence comprises a finite number of address, for instance one. In another variant, the sequence is limited in the time, for instance the client tries to connect for a finite duration of 30 seconds.

In a second phase, the client later connects with a chosen address through the request 160. The server, having a mean for a posteriori checking the entire sequence of addresses, gives the access to the client using the chosen address. In other words, when the verification of addresses is successful, the server 110 grants access to the client for the last address of the sequence, for the client original address or for a chosen address computed from any sequence addresses.

The secret and the function verifying or computing the sequence of addresses are implemented as hardware or software on the server 110 and on client devices 120. Since the server access is denied by default, the server advantageously does not respond to the client request. Advantageously, nothing differentiates a request, also called registration request, for accessing the server according to the invention from a request usually used in a network for communication between a client and a server. That is the sequence of addresses which constitutes the authentication proof. Thus the invention is advantageously compatible with any networking protocol. Advantageously, the invention does not require opening/implementing a dedicated registration service, nor involving a private network administrator to retrieve client device address, nor interpreting the payload of the request issued from new client in the registration method.

**Figure 2** illustrates an exemplary server device according to a preferred embodiment of the present invention. The server device is for example the Internet network access point of a private network. According to different variant, the server may be implemented in a computer, a gateway, a mobile device, game console. The server 200 comprises a network interface 210, such as an ADSL modem, at least one processor 220 (hereinafter "processor") and memory 230. The network interface 210 is adapted to receive registration requests from the network, to send response for denying or granting access, and once the registration performed to communicate with the client device. The network interface 210 is assigned an IP address. The processor 220 is adapted to verify the registration addresses. The processor 220 is adapted to perform cryptographic algorithms. The processor stores a shared secret k. In a variant, the shared secret, as well as other secure materials, is stored on a smart card, and the server further comprises a smart card reader. Advantageously, the processor is a secure processor in charge of secure tasks. Besides based on the result of the verification, the processor is further adapted to grant or deny access to registration requests. The memory 230 is adapted to store data such as the sequence of registration addresses used in the verification step. Only the features necessary for the comprehension of the invention are detailed; it will be understood that the server 200 may further comprise internal connections and possibly, for example, a (wire-based or wireless) communication interface for communicating on the private network and a user interface.

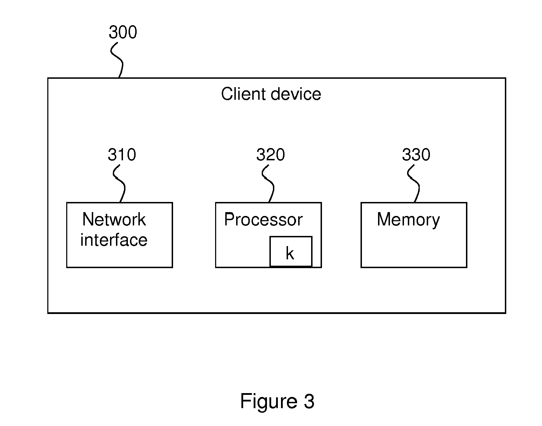

**Figure 3** illustrates an exemplary client device according to a preferred embodiment of the present invention. The client device is for remote portable device trying to access a private network. According to different variants, the client may be implemented in a computer, a mobile device, a tablet.

The client device 300 comprises a network interface 310, such as a 802.11 wireless card, at least one processor 320 (hereinafter "processor") and memory 330. The network interface 310 is adapted to connect the client device to the server and for instance send registration requests, receive response from the server in case of granted access. The network interface 310 is assigned a MAC address, in a variant assigned by the manufacturer. The processor 320 is adapted to perform cryptographic functions, to compute the sequence of address for registration. The processor stores a shared secret k, as well as other useful cryptographic materials. In a variant, the shared secret is stored on a smart card, and the client further comprises a smart card reader. In a variant, the secure functions are implemented in a piece of hardware, such as a secure processor. However, in this variant, the shared secret and secure function are not renewable. Only the features necessary for the comprehension of the invention are detailed.

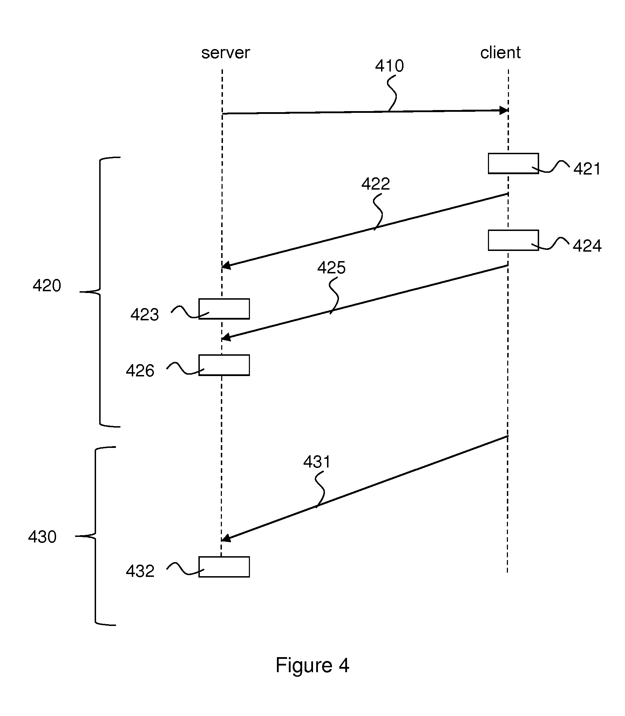

**Figure 4** illustrates the steps of the registering method in the client device according to a first embodiment of the present invention.

The registration process comprises two phases as described before comprising an address authentication phase 420 and an address registration phase 430. In the first embodiment, the connection addresses @1,..@n used in phase 420 depends on the address @c used in phase 430.

In a preliminary step 410, the server provides a ticket k to the client device. The client is granted, for instance at a manufacturing step or by the network, a determined address @c from which the sequence of connection addresses is derived.

In a step 421, the client calculates the first address in the sequence, noted @1, using a function noted f such as :

$$@1 = f(k,@c)$$

According to variants, f is a cryptographic one-way function or an encryption function such as a hash-based message authentication code, (HMAC), a Secure Hash Algorithm (SHA), Advanced Encryption Standard (AES) thus respectively noted

$$@1 = hmac(k,@c); @1 = sha1(k||@c); @1 = aes(k,@c).$$

Using a one way function is compatible with embodiments wherein the address which is registered is previously agreed between the client and the server in a convention, for instance the client and server agrees to select a given address from a common algorithm g.

Using an encryption function is advantageously compatible with embodiment wherein the client request to register a determined address, for instance the MAC address of its network interface. Unlike encryption function, a hash function cannot be reverted

In a step 422, the client send a request for connecting to the server using the first address @1 directly derived from k and @c. Upon reception of address @1, in a step 423, the server stores addresses @1 without granting any further access to the address. Advantageously, the server does not interpret the data or payload of the request, the server only store the address @1 thus advantageously reducing the attack surface.

Steps 421, 422 and 423 are iteratively repeated for each successive address in the ordered sequence of addresses. Thus, in a step 424, the client calculates the nth address in the sequence, noted @n, using the one way function noted f wherein :

$$@n = f(k,@n-1)$$

In a step 425, the client tries to connect to server using @n directly derived from k, @c. Upon reception of the address, the server stores address @n with @1,..@n-1 without granting any further access to the address.

According to a particular characteristic, the connection attempts 422, 425 are protected against eavesdropping by a lower level network layer by implementing a Diffie-Hellman (DH) key exchange which allows two parties that have no prior knowledge of each other to jointly establish a shared secret key over an insecure communications channel.

Thus the addresses @1,..@n-1 in the connection attempts are protected from an external hacker. According to variants, other techniques may be used to prevent eavesdropping, such as TCPcrypt, VPN tunnels, IPsec.

The second phase 430 comprises the registration of the connection address i.e. the address with which the client can connect to the server. The client and the server also agree on the address that is finally used in the connection. According to variants, the client and the server also agree on a convention comprising either using the actual address of the client @c, using the (n+1)th address @(n+1) in the sequence, using the jth address @j in the sequence where j belongs to 1 to n or even using a combination of addresses in the sequence. Once the client device is authenticated thanks to the request issued from the address used in the sequence addresses, any convention between the client and the server is compatible with the invention. However, in the first preferred embodiment, the convention is advantageously simple : the client connects to the server with its actual address @c in a step 431. Thus, in a step 432, the server easily verifies that @1 = f(k,@c) and @n = f(k,@n-1)) for all n and whitelists @c.

According to another particular characteristic, the latest connection, i.e; using the registered address, is protected against eavesdropping by a lower level network layer, for instance using DH, thus the registered address @c cannot be eavesdropped. According to variants, other techniques may be used to prevent eavesdropping, such as TCPcrypt, VPN tunnels, IPsec. Thus, the solution is advantageously more robust against an external attacker when the registered address @c is protected against eavesdropping. Otherwise an attacker might simply capture and spoof the latest address @c and gain access to the private network. It should besides be noticed, that the latest address @n is advantageously not repeated as a connection address, specifically if the first phase is not protected, otherwise an attacker might also simply capture and spoof this latest address. Such condition is typically met by VPNs, such as OpenVPN or IP over TCPcrypt as described above. However, it is not met by current 802.11 communication. Thus if 802.11 communication are compatible with the authentication phase, this protocol is preferably not used for the communication used on the registered address or should be encapsulated by a further protection layer as described above.

In another particular characteristic, once the client has established a first connection with the server, and if the client latter wishes to re-connect to the server with a different address connection, the client uses the previous connection address, i.e. the registered address, as the first address in a new sequence of addresses. In a variant characteristic, the client uses the latest address as the first address in the new sequence of addresses. Thus, the client advantageously avoids replaying the sequence of addresses from its actual address @c. For instance, if the client has address @n+1 registered previously registered by the server, the client first send a request to the server using address @n+2 as the first address in the new sequence.

In another particular characteristic, the server verifies the sequence addresses in the registration phases, but the verification is also possible as the request are received from the client. Besides, the server may be adapted to compute the successive addresses in the sequence in advance (i.e. using the previous address is the sequence), thus simplifying the verification step to a simple comparison.

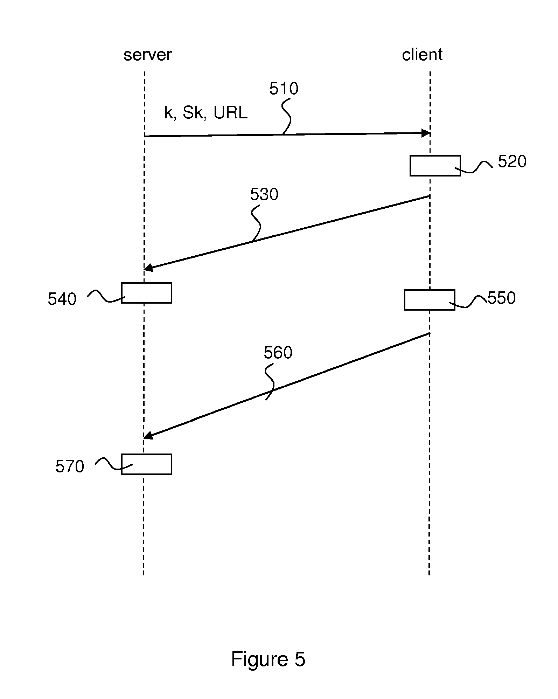

**Figure 5** illustrates the steps of the registering method according to a preferred embodiment of the present invention. In the preferred embodiment, an MAC Address is registered for an OpenVPN Ethernet Tunnel relying on a shared key and further implementing MAC address access control. OpenVPN is a client and server software that allows building a virtual private network. OpenVPN allows building routed or switched connections between possibly remote sites. Transmission Control Protocol (TCP) is a widespread protocol used to establish connections on the Internet network. In OpenVPN, authentication of client devices either relies on a shared key (shared by all clients) or on certificates. In the preferred embodiment of the present invention, OpenVPN relies on a shared key (Sk). Besides, in order to protect communication on the OpenVPN, VPN connections and encrypted tunnels are established at several layers and using variant methods. Thus, in the preferred embodiment , OpenVPN establishes a secure channel using the shared secret (Sk). Without the knowledge of Sk, it is not possible to decrypt the traffic. To prevent eavesdropping from clients having Sk, it is assumed that these clients are not on the same network link than the one between the former device and the server. In variant embodiments, TCPCrypt or SSL based communication can be used prevent eavesdropping as well. A Media Access Control address (MAC address) is a unique identifier assigned to network interfaces for communications on the physical network segment. MAC addresses are used for numerous network technologies and most IEEE 802 network technologies, including Ethernet. In the preferred embodiment of the present invention, a MAC address based access control is further implemented because of the vulnerability of the shared key.

In a preliminary step 510, the server provides a ticket k to the client device for registration purpose, a connection URL and the share key Sk. The ticket k is the shared secret used to compute and verify the sequence of addresses respectively at the client and at the server. The connection URL (or uniform resource locator) constitutes a reference to the Internet server resource used to access the virtual private network. The server advantageously sends the secure material Sk, URL, k out of band to the client, for instance by mail or when the device is physically connected to the private network.

In a first step 520, the client launches the VPN application, selects the connection URL and the shared key and retrieves the stored registration ticket k associated with the URL. The client computes a transient MAC address, noted Transient_MAC_addr, by encrypting the characteristics of the physical device noted MAC_Wi-fi :

Transient_MAC_addr = Encrypt(ticket k, MAC_Wi-fi)

In a second step 530, the client connects to the server with the transient MAC address. This connection request is protected against eavesdropping as it is typically the case with VPN tunnels :

Connect (Transient_Mac_addr, URL, Sk)

In a third step 540, the server decrypts the device characteristics, computes the authorized MAC_vpn_addr, saves all information, and grants rights for MAC_vpn_addr as follows:

Get device info: MAC_Wi-fi = (Decrypt(ticket k, Transient_Mac_addr))

Compute MAC_vpn_addr = HASH (MAC_Wi-fi)

Save info (MAC_vpn_addr, MAC_Wi-fi)

Grant rights(MAC_vpn_addr)

Then the server resets the connection which automatically restarts the client.

Consequently in a following step 550, the client computes the new connection address MAC_vpn_addr

Compute MAC_vpn_addr = HASH (MAC_Wi-fi)

And in a step 560, the client reconnects the server with the MAC_vpn_addr :

Connect (MAC_vpn_addr, URL, Sk)

In a last step 570, the server verifies the given MAC address MAC_vpn_addr regarding the saved device characteristics

Verify (MAC_vpn_addr, HASH (MAC_Wi-fi))

When the verification is successful, the server then applies to MAC_vpn_addr the MAC address based security policy of MAC_Wi-fi.

A same MAC address based security policy can be shared over several access means (WiFi, VPN, ...). There is no constraint on the order of access means used. For instance, a device can use WiFi for its first connection, and then reconnect through a VPN. The converse is also possible.

The skilled person will also appreciate that as the registering method can be implemented quite easily without the need for special equipment, it may be implemented by 'normal' user devices such as PCs, mobile phones, gateways in home networks and so on. The invention is further compatible with 802.11 communication (Wi-Fi), or any wire or wireless access such as Bluetooth or UWB.

The description is focussed on MAC addresses however the invention is compatible with any address-based access control mechanisms, based e.g. on IPv4 addresses or IPv6 addresses or other address-based access control mechanisms used e.g. for mobile phones.

Each feature disclosed in the description and (where appropriate) the claims and drawings may be provided independently or in any appropriate combination. Features described as being implemented in software may also be implemented in hardware, and vice versa. Reference numerals appearing in the claims are by way of illustration only and shall have no limiting effect on the scope of the claims.

**Claims**

1. Method for registering a client (120) to a server (110) connected through a network (130), the client being assigned with a determined network address, the method comprising:

   a) a step of sending by said client to said server, a request (150) comprising a first network address among a sequence of at least one network address;
   b) a step of denying by said server said request comprising said first network address among said sequence of at least one network address;

c) a step of sending by said client to said server, a request (170) comprising a second network address;

d) a step of granting by said server the request comprising said second network address when the verification of the sequence of at least one address for which request was denied succeed;

wherein the first network address among said sequence of at least one network address is derived from a first function using a shared secret (k) between the client and the server and said determined network address of the client.

2. Method according to claim 1 wherein step a) and step b) are iteratively repeated (160) for each successive network address among said sequence of at least one network address and wherein a successive network address among said sequence of at least one address is derived from said first function using said shared secret and a previous network address among said sequence of at least one network address.

3. Method according to any of claims 1 to 2 wherein said second network address is derived from a second function using said determined network address.

4. Method according to any of claims 1 to 2 wherein said second address is derived from a second function using an address among said sequence of at least one network address.

5. Method according to any of claims 1 to 2 wherein said second address is derived from a second function using a last address from said sequence of at least one network address.

6. Method according to any of claims 3 to 5 wherein said second function is the equal function.

7. Method according to any of claims 3 to 5 wherein said second function is a hash function.

8. Method according to any of claims 1 to 7 wherein said first function is a hash function.

9. Method according to any of claims 1 to 7 wherein said first function is a reversible encryption function.

10. Method according to any of claims 1 to 9 wherein the step for sending by said client to said server, a request comprising a second network address further comprises encrypting/protecting said second network address.

11. Method according to any of claims 1 to 10 wherein the step for sending by said client to said server, a request comprising a first network address further comprises encrypting/protecting said first network address.

12. Method according to any of claims 1 to 11 wherein step a) to d) are repeated for registering a third network address and wherein said first network address among said sequence of at least one network address is derived from a shared secret between the client and the server and from said second network address of the client previously granted by the server.

13. Method according to any of claims 1 to 12 wherein the server applying deny by default registering of network address.

14. Server device for registering a client device in a network, the server device comprising:

   • means for receiving from said client device a request comprising a network address;
   • means for storing each of said network address from each of said received request as a sequence of at least one network address;
   • means for storing a secret shared between the client device and the server device;
   • means for verifying that a successive network address among said sequence of at least one network address is derived from a first function using said shared secret and a previous network address among said sequence of at least one network address;
   • means for sending a response granting registration for a network address from the last received request from the client when the verification of the sequence of at least one address succeed.

15. Client device for requesting registration in a network which access is controlled by a server device, the client device comprising:

• means for storing a determined network address wherein said determined network address is a first network address among a sequence of at least one address;

• means for storing a secret shared between the client device and the server device;

• means for iteratively computing a successive network address among said sequence of at least one network address wherein a successive network address among said sequence of at least one network address is derived from a first function using said shared secret and a previous network address among said sequence of at least one network address;

• means for sending to said server device a request comprising a network address wherein said network address belongs to said sequence of at least one network address followed by a second network address;

• means for receiving from said server device a response granting registration for a network address from second network address.

100

130    110    140

120    150  160 170

Client

k

Server

k

Figure 1

200

Server device

210    220    230

Network
interface

Processor

k

Memory

Figure 2

300

Client device

310

320

330

Network interface

Processor

k

Memory

Figure 3

Figure 4

server          client

510

k, Sk, URL

520

530

540          550

560

570

Figure 5

Europäisches
Patentamt

European
Patent Office

Office européen
des brevets

# EUROPEAN SEARCH REPORT

Application Number

EP 12 30 6093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MARCO GRUTESER ET AL: "Enhancing Location Privacy in Wireless LAN Through Disposable Interface Identifiers: A Quantitative Analysis", MOBILE NETWORKS AND APPLICATIONS, KLUWER ACADEMIC PUBLISHERS, BO, vol. 10, no. 3, 1 June 2005 (2005-06-01), pages 315-325, XP019213672, ISSN: 1572-8153, DOI: 10.1007/S11036-005-6425-1 * Section 3.2 "Address Selection" Section 5.2 "Access Control Mechanisms" * ----- | 1-15 | INV. H04L29/06 H04L12/22 |
| A | US 2008/298592 A1 (KHALID MOHAMED [US] ET AL) 4 December 2008 (2008-12-04) * paragraph [0027] * * paragraph [0051] * * paragraph [0053] * * paragraph [0055] * * paragraph [0058] * * paragraph [0059] * ----- | 1-15 | |
| | | | TECHNICAL FIELDS SEARCHED (IPC) |
| A | US 2004/103310 A1 (SOBEL WILLIAM E [US] ET AL) 27 May 2004 (2004-05-27) * paragraph [0006] * * paragraph [0018] * ----- | 1-15 | H04L H04W |

The present search report has been drawn up for all claims

| Place of search | Date of completion of the search | Examiner |
|---|---|---|
| The Hague | 12 February 2013 | Lázaro, Marisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 30 6093

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2013

| Patent document cited in search report | Publication date | Patent family member(s) | Publication date |
|---|---|---|---|
| US 2008298592 A1 | 04-12-2008 | NONE | |
| US 2004103310 A1 | 27-05-2004 | NONE | |

EPO FORM P0459

For more details about this annex : see Official Journal of the European Patent Office, No. 12/82